# FASCICULE DE BREVET EUROPEEN

(11) **EP 3 005 245 B1**
(45) Date de publication et mention de la délivrance du brevet: **06.01.2021**
(21) Numéro de dépôt: 14730111.3
(22) Date de dépôt: 02.06.2014
(51) Int. Cl.: G06K 19/077

(54) **PROCÉDÉ DE FABRICATION D'UN DISPOSITIF RADIOFRÉQUENCE AVEC MAINTIEN DE CONNEXION ANISOTROPIQUE**
HERSTELLUNGSVERFAHREN EINER FUNKVORRICHTUNG MIT AUFRECHTERHALTUNG EINER ANISOTROPEN VERBINDUNG
METHOD FOR MANUFACTURING A RADIO FREQUENCY DEVICE WITH MAINTAINING OF ANISOTROPIC CONNECTION

(30) Priorité: 07.06.2013 EP 13305765
(43) Date de publication de la demande: 13.04.2016
(73) Titulaire: Thales Dis France SA, 92190 Meudon (FR)
(72) Inventeur: BOUSQUET, Christophe, F-13705 LA Ciotat (FR); CUNY, Yves, F-13705 LA Ciotat (FR); LACAZE, Brigitte, F-13705 LA Ciotat (FR); BAJOLLE, Antoine, F-13705 LA Ciotat (FR); GASPARI, Sébastien, F-13705 LA Ciotat (FR); SEBAN, Frédérick, F-13705 LA Ciotat (FR)
(74) Mandataire: Milharo, Emilien
(86) Numéro de dépôt international: PCT/EP2014/061403
(87) Numéro de publication internationale: WO 2014/195273

(56) Documents cités:
- FR-A1- 2 861 201
- US-A1- 2010 243 743

## Description

### Domaine de l'invention.

L'invention concerne un procédé de fabrication d'un dispositif semi-fini (intermédiaire) et final, comportant notamment un corps-support qui intègre des zones de connexion d'un circuit électrique / électronique.

Plus particulièrement, l'invention vise de tels dispositifs comportant une antenne radiofréquence connectée à un module électronique (ou une puce) radiofréquence avec une matière de connexion telle que ACF ou ACP (film conducteur ou pâte conductrice anisotropique).

L'invention concerne notamment le domaine des supports ou dispositifs électroniques radiofréquences tels que cartes à puce radiofréquences ou cartes hybrides, tickets ou étiquettes radiofréquences, passeports électroniques, transpondeurs radiofréquences, inserts (ou inlay) intégrant ou constituant de tels supports.

Ces supports électroniques trouvent application dans différents domaines de la carte à puce, en particulier pour des applications bancaires (EMV), d'identité, de sécurité, d'authentification, d'accès, de fidélité, passeport.

De tels supports électroniques peuvent être conformes notamment au standard ISO / IEC 14443 ou autre standard radiofréquence notamment NFC (Near field communication : champ radiofréquence de proximité).

Un module électronique peut constituer ou comprendre des plages conductrices de connexion ou d'interconnexion, portées, le cas échéant, par un substrat isolant.

### Art antérieur.

Le brevet US 5 598 032 décrit un procédé d'assemblage d'un module destiné à se connecter à une antenne noyée dans un corps-support de carte à puce hybride (contact et sans contact), il est connu de ménager une cavité dans le corps-support de manière à rendre les plages de connexion de l'antenne accessibles pour une connexion avec le module lors de son report dans la cavité. Des éléments d'interconnexion conducteurs de toute sorte peuvent relier des zones de connexion du module disposées en dehors de l'enrobage et les plages de connexion de l'antenne.

Par ailleurs, il a été proposé sur le marché, une carte à duale interface (contact et sans contact) du type ci-dessus avec une antenne en métal gravé sur un substrat puis comprise dans un corps de carte ; la connexion entre un module à contacts externes munis de bornes d'interconnexion sous le module et les extrémités de connexion de l'antenne est réalisée par une feuille d'ACF disposée entre eux. Plusieurs interconnexions (2 ou 3) sont nécessaires à différents endroits répartis autour du module pour connecter chaque extrémité de l'antenne. Cette multiplication d'interconnexions avec l'antenne permet de garantir, dans une certaine mesure, une connexion électrique entre le module et l'antenne lors de contrainte de flexion / torsion de la carte.

La matière anisotropique comprend, dans une version connue, une base thermo-adhésive avec des microbilles conductrices noyées dedans. Le film est conducteur à un endroit perpendiculaire au film lorsque le film est compressé à cet endroit et que les billes sont rapprochées entre elles pour former une zone de conduction électrique entre deux surfaces conductrices à interconnecter.

Au cours des torsions / flexions, les billes peuvent s'éloigner les unes des autres et perdre la conduction électrique qu'elles avaient auparavant entre elles.

La demande de brevet FR 2861 201 décrit un procédé de fabrication d'une carte finie à double interface. Un module à contacts électriques externes est inséré dans une cavité du corps de carte finie et est connecté à des plages de connexion d'une antenne par adhésif anisotropique. Le module comprend une puce enrobée par une résine isolante qui maintient le module au fond de la cavité grâce à sa capacité importante de retrait pendant son durcissement afin assurer une bonne connexion électrique du module à l'antenne. Pour l'encartage du module dans la cavité, un jeu est nécessaire entre les bords du module et les parois de la cavité.

Le document US 2010/0243743 A1 décrit un procédé de fabrication d'un insert pour étiquette RFID comportant un moyen de maintien de l'état compressé de la matière anisotropique connectant la zone d'interconnexion et la puce RFID.

### Problème technique.

Au cours d'un examen de ce type de carte à interface duale (hybride) dotée d'un film ACF ci-dessus, les inventeurs ont découvert des inconvénients ci-après. Après un certain temps de stockage, les cartes hybrides avec ACF présentent des défauts de fonctionnement.

En outre, des couches de matériau fragiles, utilisées en couverture dans les corps de cartes à puce peuvent être endommagées par des fissures qui naissent et se propagent dans la zone du module.

D'autre part, des assemblages actuels (soudure, thermo compression) de module dans un corps de carte peuvent donner lieu à des distorsions du support de puce (leadframe) ajoutant des contraintes supplémentaires sur le module, pouvant être visibles à la surface du corps de carte.

### Résumé de l'invention.

A l'origine de l'invention, les inventeurs ont découvert que la connexion électrique entre un module et le circuit ne s'effectuait plus, ou mal. Ils ont constaté un gonflement inattendu du film ACF provoquant une rupture de la connexion entre le circuit et le module. La cause de cette réaction de gonflement a été mise en évidence par les inventeurs et s'expliquerait par une réaction à l'humidité et/ou atmosphère salée de la matière anisotropique exposée à l'extérieur.

L'invention vise un procédé de fabrication d'un dispositif à module électronique intermédiaire, ledit dispositif intermédiaire étant destiné à recevoir au moins une feuille ou portion de feuille ou couche de couverture d'un dispositif comportant un module interconnecté par ACF à un circuit (notamment une antenne) et présentant dans une de ses configurations intermédiaires (ou semi-finies), l'ACF exposé ou débouchant à l'extérieur. L'invention prévoit un premier moyen permettant d'éviter le problème de gonflement et/ou de maintenir une compression sur la matière conductrice (dans la direction de la connexion généralement perpendiculaire au corps de carte) pour assurer la connexion du module avec le circuit. Ce moyen dans un mode préféré peut comprendre au moins une feuille de recouvrement et/ou matière de protection isolant l'ACF de l'extérieur.

A cet effet, l'invention a pour objet un procédé de fabrication d'un dispositif à module électronique intermédiaire conformément à la revendication 1.

Selon d'autres caractéristiques ou modes de réalisation :
- ledit moyen de maintien et ou d'isolation recouvre au moins en partie ledit module (17) et est fixé au corps-support (31, 32).
- le moyen de maintien et/ou d'isolation est sensiblement stable ou étanche à l'humidité ;
- Le moyen de maintien et / ou d'isolation comprend une couche ou feuille chevauchant le module et le corps support ;
- En cas de couche ou feuille plus élastique ou plus souple comparativement aux feuilles de couverture, le moyen de maintien et/ou d'isolation a aussi l'avantage d'absorber des déplacements du module au cours de flexions / torsions du dispositif ou de découpler mécaniquement les feuilles de couverture du module de manière à éviter une génération ou propagation de fissures ;
- La couche ou feuille peut s'étendre sur toute la surface du corps-support ;
- Le circuit est choisi parmi une antenne, un afficheur, un capteur, un clavier, un interrupteur, composant électrique/électronique, etc. ;
- Le circuit en forme d'antenne peut comprendre un fil conducteur incrusté ;
- La zone de contact peut comprendre des alternances de fil ;
- Le module peut comprendre un côté débouchant sur chacune des faces opposées du corps-support et le moyen de maintien fixe le module par chacun de ses côtés au corps-support ; en particulier, le moyen de maintien peut comprendre deux couches ou feuilles (notamment adhérentes) recouvrant le module et fixées au corps-support.

L'invention a également pour objet un dispositif correspondant au procédé constituant ou comportant le module.

### Brève description des figures.

- Les figures 1 et 2 illustrent un exemple de module de carte à puce de circuit intégré hybride de l'art antérieur ;
- Les figures 3 et 4 illustrent une étape d'un premier mode de réalisation de l'invention respectivement en vue de dessus et en coupe A-A de la figure 4 ;
- Les figures 5 et 6 illustrent un module utilisable par l'invention avec deux répartitions différentes de la colle anisotropique ;
- La figure 7 illustre une coupe selon B-B de la figure 6 ;
- La figure 8 illustre une étape subséquente à l'étape illustrée aux figures 3 et 4 ;
- Les figures 9 et 10 illustrent un second et troisième modes de réalisation de l'invention.

### Description.

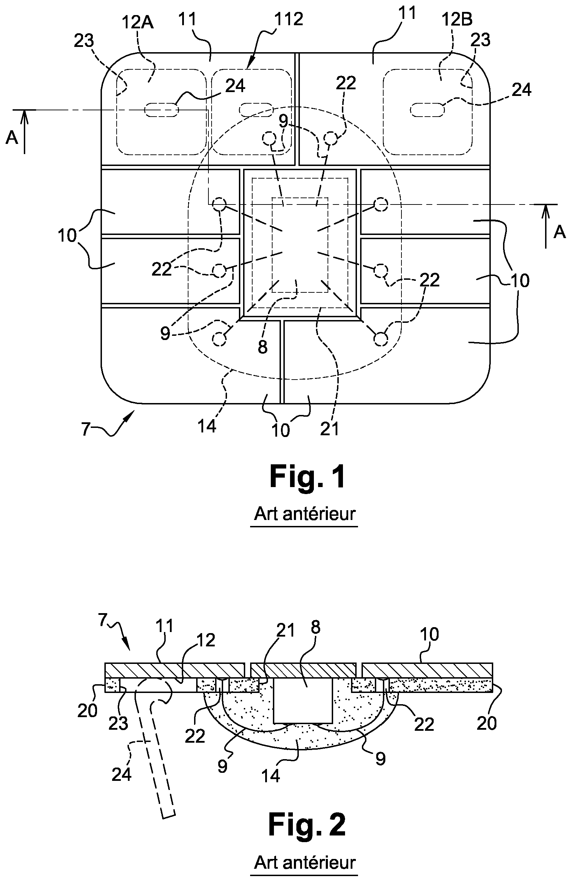

Les figures 1 et 2 illustrent un exemple de module 7 de carte à puce de circuit intégré hybride de l'art antérieur. Le module 7 comprend des plages de contact 10, 11 sur un support 20 diélectrique ou isolant notamment du type LFCC (Lead frame contrecollé), au moins une puce de circuit intégré 8 reportée sur le support 20 ou ici sur une plage métallique de contact ou non. Les plages de contact sont destinées à connecter un connecteur de lecteur de carte à puce.

Le module comprend également des connexions 9 pour notamment connecter des plages de contact par fils soudés, par colle conductrice ou autre, une puce électronique 8 (ici de type hybride) pouvant être retournée (flip-chip) ou non ; Il comprend un enrobage 14 de la puce et/ou de ses connexions par une matière de protection telle une résine (glob-top).

Les connexions 9 peuvent connecter les plages de contact à travers des orifices 22 ménagés dans le support isolant.

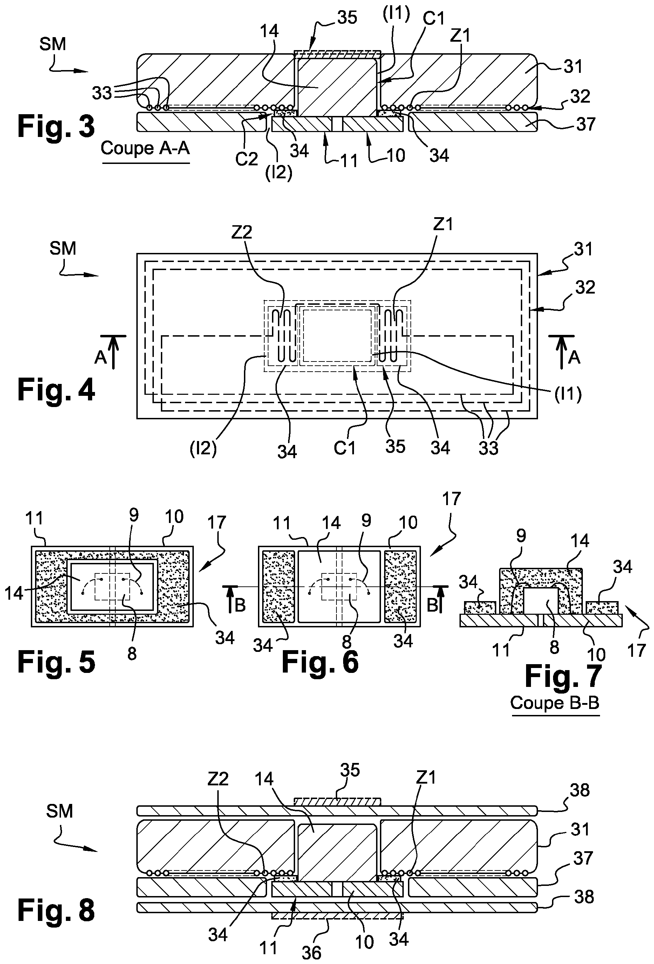

Les figures 3 et 4 illustrent une étape d'un premier mode de réalisation d'un procédé de fabrication d'un dispositif électronique selon l'invention respectivement en vue de dessus et en coupe A-A de la figure 4.

Le dispositif comporte un corps-support 31, au moins une zone d'interconnexion Z1, Z2 d'un circuit électrique et/ou électronique 32, porté par le corps support, un module électronique 17 connecté à ladite zone d'interconnexion par une matière 34 ou matériau de connexion anisotropique, la matière (ou matériau) étant compressée entre ladite zone Z1, Z2 et le module 17.

Dans l'exemple, le dispositif est une carte purement sans-contact (radiofréquence) ayant comme circuit électrique une antenne radiofréquence 32 connectée à un module radiofréquence 17. Toutefois, le dispositif peut être alternativement un passeport électronique, une clé radiofréquence, un circuit imprimé, un lecteur radiofréquence, une étiquette RFID, tout objet électronique, un dispositif multi-composants.

Le circuit électrique et/ou électronique peut être choisi parmi ou comprendre notamment une antenne, une bobine, un afficheur, un capteur, un clavier, un condensateur, un interrupteur, un composant électrique et/ou électronique, une batterie d'alimentation en énergie, un circuit imprimé (PCB).

L'antenne 32 est composée ici de spires 33, formées sur un substrat ou corps-support 31, par tout moyen connu notamment par sérigraphie, jet de matière conductrice, technique d'électrodéposition, gravure. L'antenne est ici en fil incrusté par technique ultrason sur la surface principale du substrat 31 qui est notamment en matière plastique connue (ABS, PC, PET) ou fibreuse. Pour d'autres fréquences radiofréquences (notamment UHF), l'antenne peut présenter une forme différente des spires planes. Les plages de contact ou zones d'interconnexion de l'antenne sont formées par des zigzags (ou alternances rapprochées) de fils conducteurs. L'invention s'applique aussi à des plages métalliques notamment de forme rectangulaire, par exemple en cuivre ou étain (étamé ou non)

L'antenne comporte des zones de contact ou interconnexion Z1, Z2 espacées d'une distance correspondant aux plages ou zones d'interconnexion du module radiofréquence (ou plots de connexion de la puce dans le cas d'un module constitué d'une puce électronique).

Dans le cas où, comme dans l'exemple, les plages sont constituées de fils conducteurs recouverts d'isolant, ce dernier peut être supprimé à l'endroit de la connexion par tout moyen connu notamment mécanique, usinage ou par laser, attaques chimiques ou thermiques.

Le substrat ou corps-support 31 est assemblé ici avec une feuille de compensation 37 recouvrant l'antenne. Alternativement, c'est l'autre feuille 31 qui forme une feuille de compensation. Cette feuille de compensation d'épaisseur 37 comporte une perforation ou cavité C2 centrée sur une perforation ou cavité C1 du substrat 31 séparant les plages de contacts de l'antenne.

Alternativement, le substrat (ou corps-support) peut ne pas avoir de cavité, et recevoir un circuit et un module ou puce en surface de la feuille (par exemple le cas d'une étiquette RFID ou transpondeur NFC). Le corps-support peut aussi être réalisé par moulage et la cavité obtenue par moulage avec noyau ou usinage.

Le module électronique (17) ou (14, 10, 11) comprend dans l'exemple deux plages de contact ou de connexion 10, 11 (sans support diélectrique) reliées à la puce 8 par une connexion, notamment filaire 9, un enrobage 14 comme précédemment. Alternativement, la puce peut être montée en flip-chip (retournée) et sans enrobage de protection.

Puis une matière ou matériau conducteur anisotropique 34 est placé entre les plages de l'antenne et celles du module (ou plots de la puce) avant d'effectuer la connexion par report du module. On peut utiliser un matériau sous forme de film (ACF) ou de pâte (ACP).

Ils sont distribué par exemple par la société Sony sous les références FP2622A, FP2322D, FP2322A, FP2322US en ACF et BP533E, BPS0034A1 en ACP ; Ils sont également distribués par la société Tesa sous les références HAF 8412 et HAF 8414 en ACF ou par la société 3M sous les références 5363, 7376, 7378, 7371, 5379 en ACF.

Selon un avantage de l'invention, le matériau conducteur peut posséder la propriété d'être plus souple que les feuilles de couverture 38 à la température d'utilisation du produit électronique (notamment entre - 15 °C et 60 °C).

Sur les figures 5, 6, 7, le matériau conducteur 34 (adhésif ou thermo adhésif) peut être disposé ou laminé sur les plages de connexion 10, 11 du module (ou puce). Sur les figures 6 et 7, le matériau est disposé sur chaque plage de contact (ou de connexion).

Sur la figure 5, le matériau 34 a une forme annulaire pour entourer l'enrobage 14.

L'épaisseur de la matière conductrice anisotropique peut être calculée pour permettre un fluage du matériau dans les interstices environnant le module après assemblage avec le corps du produit ou au contraire ne pas fluer outre mesure (par exemple dans le cas où on souhaite remplir les interstices avec une autre matière d'un moyen de maintien comme expliqué ultérieurement).

Le cas échéant, pour permettre notamment une éjection d'air emprisonné sous une feuille ou couche de couverture, le dispositif peut comprendre une ou des ouvertures dans la couche ou feuille de couverture.

Puis au cours d'une autre étape, le module 17 est reporté contre l'antenne, pressé et chauffé au moins sur cette zone de connexion pour établir la connexion avec les zones de connexion Z1, Z2 de l'antenne et éventuellement un fluage du matériau dans les interstices environnant le module et situés à l'interface entre le module et le corps-support.

Alternativement, le matériau conducteur 34 peut être appliqué directement sur les zones de connexion de l'antenne Z1, Z2 ; puis le module (ou puce) est reporté contre l'antenne, pressé et chauffé au moins sur cette zone de contact.

La connexion s'effectue par compression de la matière entre les zones d'interconnexion Z1, Z2 et les plages de connexion 10, 11 du module. La connexion peut s'effectuer par report du module avec un outil d'insertion exerçant une pression et un chauffage. Le cas échéant, la connexion s'effectue par une lamination ou pressage de l'ensemble (module, corps-support, matériau de connexion) entre deux rouleaux ou plaques de presse chauffante.

Selon une caractéristique de ce mode de réalisation ou de mise en œuvre, le procédé prévoit de doter le dispositif d'un moyen de maintien de l'état compressé de la matière anisotropique 34. Ce moyen de maintien recouvre au moins en partie le module et est fixé au corps-support.

Dans l'exemple, à la figure 8, ces moyens comprennent au moins une feuille de couverture définitive ou provisoire (dans la mesure où d'autres feuilles ou couches de couverture peuvent venir compléter le dispositif).

Le moyen de maintien est sensiblement stable ou étanche à l'humidité. Dans l'exemple, les feuilles utilisées sont en PVC, PET, PETg, PC (polycabonate).

Un dispositif semi-fini SM (inlay ou insert) est ici obtenu par lamination à chaud. Les interstices I1, I2 existant entre le module et le corps-support et sensiblement perpendiculaires à la surface du corps-support, peuvent aussi être remplis par la matière des feuilles de couverture 38.

L'opération de connexion du module à l'antenne et l'opération de comblement au moins partiel des interstices ou fente environnant le module peut avantageusement s'effectuer par lamination à chaud de l'ensemble.

Par ailleurs, l'interstice I1 à l'arrière du module peut, le cas échéant, être également comblé par un « patch » arrière élastique ou souple 35 qui a également flué dedans.

La surface arrière de l'enrobage peut également comporter la matière élastique 35 absorbant des compressions du module vers la surface arrière du substrat (survenant notamment au cours de flexion / torsion du dispositif final.

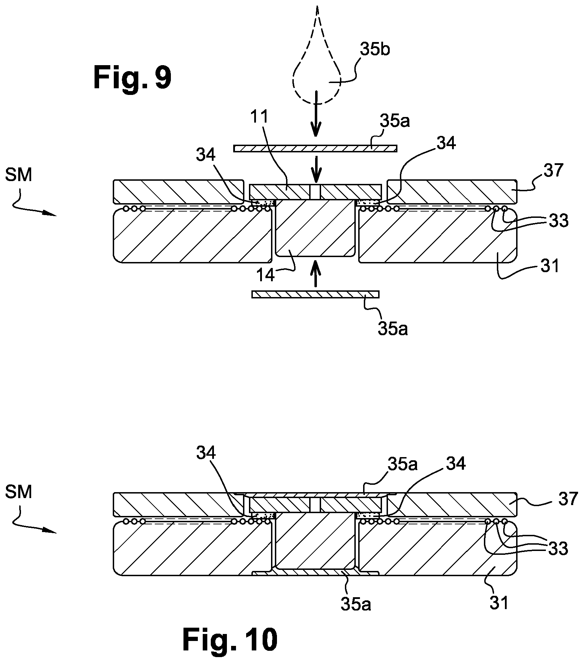

Sur les figures 9 et 10, l'invention prévoit une construction similaire à la figure précédente mais avec des moyens de maintien sensiblement différents.

Les feuilles de couvertures 38 sont remplacées par des portions de feuille 35a qui s'étendent ici entièrement sur le module et partiellement sur le corps-support.

A la figure 10, après lamination à chaud, la connexion est effectuée et les portions de feuilles ou couches 35a comblent correctement les différences de niveaux éventuelles entre le module et la surface du corps-support. Les surfaces externes du dispositif sont planes suite à la lamination et prêtes à accueillir, le cas échéant, d'autres éléments de surface ou d'autres feuilles de couverture.

Ce dispositif a l'avantage de pouvoir être stocké tel quel, sans risques de détérioration des connexions, comme inlay ou insert provisoire. Ce dispositif provisoire peut être repris pour être conditionné dans une forme définitive, notamment comme carte à puce radiofréquence, bancaire, d'identité, badge ou passeport, avec d'autres feuilles de finition ou traitement graphique, vernis, etc.

Ainsi, la matière anisotropique est maintenue compressée pour une bonne connexion électrique du module à l'antenne. En outre, la matière anisotropique est maintenue isolée de l'atmosphère extérieure et protégée contre toute réaction de gonflement due à de l'humidité.

Le dispositif a l'avantage de maintenir chaque connexion électrique même après des tests normalisés de flexions/torsions et autre tests normalisés applicables.

Accessoirement aussi, avant un pressage à chaud, on peut disposer un patch ou pièce de matériau souple ou élastique thermo fusible 35 (en pointillés) contre l'arrière du module, ici contre l'enrobage 14. Ce patch peut s'étendre sensiblement sur toute la surface de la cavité C1 et l'interstice I1 entre la cavité et l'enrobage 14. Il peut être destiné à absorber des contraintes pouvant naître à l'interface du module avec le substrat et stopper d'éventuelles propagations de fissures à des feuilles de couvertures recouvrant le substrat 31.

Ce patch peut aussi permettre d'avoir les fonctions des portions de feuille 35a ou des feuilles 38. Le cas échéant, on peut s'affranchir d'une feuille 38 sur l'un ou l'autre côté du module exposé à l'extérieur du corps-support. Le patch remplit les interstices autour du module.

Le moyen de maintien peut prendre différentes formes ; il peut être annulaire pour recouvrir un interstice périphérique autour du module ; il peut être distribué sous forme d'une ou plusieurs gouttes de matière isolante au-dessus du module 35b (fig. 9) ou d'une pâte isolante thermo-fusible.

Les dimensions du film conducteur 34 (ACF ou pâte électriquement conductrice, ACP) peuvent être ajustées aux zones de contact de l'antenne et/ou du module. Alternativement, les dimensions du film conducteur électrique peuvent être ajustées à celles du module (ou puce).

Le pressage est de préférence réalisé ultérieurement au cours d'une lamination du produit une fois assemblé, de préférence avec des plaques ou feuilles de couverture et autre patch ou pièce d'anti-fissure. De préférence, l'assemblage s'effectue sur des plaques ou feuilles de grandes dimensions comportant une pluralité de modules et d'antennes. Le substrat 31 peut aussi être sous forme de bande continue. Le dispositif final étant ensuite extrait par découpe du substrat à pluralité de dispositifs.

A la figure 8, l'invention prévoit une construction similaire à la figure 3, à la différence que le patch 35 est disposé à l'extérieur d'une feuille de couverture recouvrant le substrat 31 du côté de l'enrobage.

Le cas échéant, le mode de réalisation ci-dessus peut comporter un autre patch 35 élastique et thermo fusible à l'aplomb des plages de contact du module ou de la cavité C2 dans la feuille de compensation.

Dans d'autres variantes non représentées, le moyen de maintien peut être mécanique comme par exemple des moyens d'accrochage mécanique. La résine du module peut être en forme de cran comme une cheville ou pas de vis. Au cours de la connexion du module par compression de la matière anisotropique, les crans de l'enrobage accrochent les parois de cavité du corps support.

Le cas échéant, le module comporte des griffes d'accrochage (excroissances des plages de connexion qui s'enfoncent dans le corps-support comme une agrafe).

Alternativement, on réalise avec un outil adapté des déformations, découpes des plages de connexions qui s'enfoncent dans les zones de connexion Z1, Z2 à la manière des connexions du type « crimp » dans les étiquettes électroniques. Ainsi, par interpénétration, les plages de connexion du module peuvent être accrochées aux zones de connexion Z1, Z2 pour maintenir une compression des billes de la matière anisotropique.

## Revendications

1. Procédé de fabrication d'un dispositif intermédiaire à module électronique (SM) purement radiofréquence, pour carte à puce ou passeport électronique, ledit procédé comportant une étape de formation d'un corps-support (31, 32) comportant :
- une cavité débouchant sur au moins une des faces principales du corps-support,
- au moins une zone d'interconnexion (Z1, Z2) dans ladite cavité pour interconnecter un circuit électrique (32), porté par le corps-support,
- un module électronique(17) placé dans ladite cavité et connecté à ladite zone d'interconnexion (Z1, Z2) par une matière de connexion anisotropique (34), ladite matière (34) étant compressée entre ladite zone (Z1, Z2) et le module (17),
**caractérisé en ce qu'**il comprend la mise en œuvre :
- d'un moyen d'isolation et/ ou de maintien (35, 35a, 35b, 38) de l'état compressé de ladite matière, ledit moyen d'isolation et/ ou de maintien chevauchant la cavité, le module et le corps-support.

2. Procédé selon la revendication précédente, **caractérisé en ce que** ledit moyen de maintien et/ou d'isolation recouvre au moins en partie ledit module (17) et est fixé au corps-support (31, 32).

3. Procédé selon la revendication précédente, **caractérisé en ce que** le moyen de maintien et/ou d'isolation est sensiblement stable ou étanche à l'humidité.

4. Procédé selon l'une des revendications précédentes, **caractérisé en ce que** le moyen de maintien et/ou d'isolation comprend une couche ou feuille (35, 35a, 35b) chevauchant au moins partiellement le module et le corps support.

5. Procédé selon la revendication précédente, **caractérisé en ce que** la couche ou feuille (38) s'étend sur toute la surface du corps-support.

6. Procédé selon l'une quelconque des revendications précédentes, **caractérisé en ce que** le circuit est choisi parmi une antenne (32), un afficheur, un capteur, un clavier, un interrupteur, un composant électrique ou électronique.

7. Procédé selon l'une quelconque des revendications précédentes, **caractérisé en ce que** le circuit (32) est en forme d'antenne et comprend un fil conducteur (33) incrusté.

8. Procédé selon l'une quelconque des revendications précédentes, **caractérisé en ce que** la zone de connexion (Z1, Z2) comprend des alternances de fil.

9. Procédé selon l'une quelconque des revendications précédentes, **caractérisé en ce que** l'on dispose le module (17) dans le corps-support de manière à avoir un côté débouchant sur au moins une des faces principales opposées du corps-support et l'on dispose un moyen de maintien comprenant une couche ou feuille (35a, 38) recouvrant le module et se fixant au corps-support.

10. Procédé selon la revendication précédente, **caractérisé en ce qu'**il comprend une étape de lamination de feuilles ou portion de feuille de couverture sur le module.

11. Dispositif intermédiaire à module électronique (SM) purement radiofréquence, pour carte à puce ou passeport électronique, ledit dispositif intermédiaire comportant :
- un corps-support (31, 32),
- une cavité débouchant sur au moins une des faces principales du corps-support,
- au moins une zone d'interconnexion (Z1, Z2) dans ladite cavité pour interconnecter un circuit électrique (32), porté par le corps-support,
- un module électronique(17) placé dans ladite cavité et connecté à ladite zone d'interconnexion (Z1, Z2) par une matière de connexion anisotropique (34), ladite matière (34) étant compressée entre ladite zone (Z1, Z2) et le module (17),
**caractérisé en ce qu'**il comprend :
- un moyen d'isolation et/ou de maintien (35, 35a, 35b, 38) de l'état compressé de ladite matière anisotropique (34), ledit moyen d'isolation et/ ou de maintien chevauchant la cavité, le module et le corps-support.

## Patentansprüche

1. Verfahren zur Herstellung einer Zwischenvorrichtung mit rein elektronischem HF-Modul (SM) für eine Chipkarte oder einen elektronischen Pass, wobei das Verfahren einen Schritt zum Bilden eines Trägerkörpers (31, 32) aufweist, aufweisend:
- einen Hohlraum, der sich auf mindestens einer der Hauptflächen des Trägerkörpers öffnet,
- mindestens eine Verbindungszone (Z1, Z2) in dem Hohlraum zum Verbinden eines elektrischen Schaltkreises (32), der von dem Trägerkörper getragen wird,
- ein elektronisches Modul (17), das in dem Hohlraum angeordnet und durch ein anisotropes Verbindungsmaterial (34) mit der Verbindungszone (Z1, Z2) verbunden ist, wobei das Material (34) zwischen der Zone (Z1, Z2) und dem Modul (17) komprimiert ist,
**dadurch gekennzeichnet, dass** es die Implementierung umfasst von:
- einem Mittel zum Isolieren und/oder Aufrechterhalten (35, 35a, 35b, 38) des komprimierten Zustands des Materials, wobei das Mittel zum Isolieren und/oder Aufrechterhalten den Hohlraum, das Modul und den Trägerkörper überlappt.

2. Verfahren nach vorhergehendem Anspruch, **dadurch gekennzeichnet, dass** das Mittel zum Aufrechterhalten und/oder Isolieren das Modul (17) mindestens teilweise bedeckt und auf dem Trägerkörper (31, 32) befestigt ist.

3. Verfahren nach vorhergehendem Anspruch, **dadurch gekennzeichnet, dass** das Mittel zum Aufrechterhalten und/oder Isolieren im Wesentlichen beständig oder dicht gegenüber Feuchtigkeit ist.

4. Verfahren nach einem der vorhergehenden Ansprüche, **dadurch gekennzeichnet, dass** das Mittel zum Aufrechterhalten und/oder Isolieren eine Schicht oder Folie (35, 35a, 35b) umfasst, die das Modul und den Trägerkörper mindestens teilweise überlappt.

5. Verfahren nach vorhergehendem Anspruch, **dadurch gekennzeichnet, dass** sich die Schicht oder Folie (38) über die gesamte Oberfläche des Trägerkörpers erstreckt.

6. Verfahren nach einem der vorhergehenden Ansprüche, **dadurch gekennzeichnet, dass** der Schaltkreis aus einer Antenne (32), einer Anzeige, einem Sensor, einer Tastatur, einem Schalter, einer elektrischen oder elektronischen Komponente ausgewählt ist.

7. Verfahren nach einem der vorhergehenden Ansprüche, **dadurch gekennzeichnet, dass** der Schaltkreis (32) in Form einer Antenne ist und einen eingebetteten Leiterdraht (33) umfasst.

8. Verfahren nach einem der vorhergehenden Ansprüche, **dadurch gekennzeichnet, dass** die Verbindungszone (Z1, Z2) Drahtwechsel umfasst.

9. Verfahren nach einem der vorhergehenden Ansprüche, **dadurch gekennzeichnet, dass** das Modul (17) in dem Trägerkörper derart angeordnet ist, dass sich eine Seite auf mindestens einer der gegenüberliegenden Hauptflächen des Trägerkörpers öffnet und ein Haltemittel vorhanden ist, das eine Schicht oder Folie (35a, 38) umfasst, die das Modul bedeckt und an dem Trägerkörper befestigt ist.

10. Verfahren nach vorhergehendem Anspruch, **dadurch gekennzeichnet, dass** es einen Schritt des Laminierens von Folien oder eines Abschnitts einer Deckfolie auf das Modul umfasst.

11. Zwischenvorrichtung mit rein elektronischem HF-Modul (SM) für eine Chipkarte oder einen elektronischen Pass, wobei die Zwischenvorrichtung aufweist:
- einen Trägerkörper (31, 32),
- einen Hohlraum, der sich auf mindestens einer der Hauptflächen des Trägerkörpers öffnet,
- mindestens eine Verbindungszone (Z1, Z2) in dem Hohlraum zum Verbinden eines elektrischen Schaltkreises (32), der von dem Trägerkörper getragen wird,
- ein elektronisches Modul (17), das in dem Hohlraum angeordnet und durch ein anisotropes Verbindungsmaterial (34) mit der Verbindungszone (Z1, Z2) verbunden ist, wobei das Material (34) zwischen der Zone (Z1, Z2) und dem Modul (17) komprimiert ist,
**dadurch gekennzeichnet, dass** sie umfasst:
- ein Mittel zum Isolieren und/oder Aufrechterhalten (35, 35a, 35b, 38) des komprimierten Zustands des anisotropen Materials (34), wobei das Mittel zum Isolieren und/oder Aufrechterhalten den Hohlraum, das Modul und den Trägerkörper überlappt.

## Claims

1. A method for manufacturing an intermediate device with a purely radiofrequency electronic module (SM), for a smart card or electronic passport, said method comprising a step of forming a supporting body (31, 32) comprising:
- a cavity opening onto at least one of the main faces of the supporting body,
- at least one interconnection zone (Z1, Z2) in said cavity for the interconnection of an electrical circuit (32), borne by the supporting body,
- an electronic module (17) placed in said cavity and connected to said interconnection zone (Z1, Z2) by an anisotropic connection material (34), said material (34) being compressed between said zone (Z1, Z2) and the module (17),
**characterised in that** it comprises the implementation:
- of a means for isolating and/or maintaining (35, 35a, 35b, 38) the compressed state of said material, said isolating and/or maintaining means overlapping the cavity, the module and the supporting body.

2. The method according to the preceding claim, **characterised in that** said isolating and/or maintaining means at least partially covers said module (17) and is attached to the supporting body (31, 32).

3. The method according to the preceding claim, **characterised in that** the isolating and/or maintaining means is substantially stable or impervious to moisture.

4. The method according to one of the preceding claims, **characterised in that** the isolating and/or maintaining means comprises a layer or sheet (35, 35a, 35b) at least partially overlapping the module and the supporting body.

5. The method according to the preceding claim, **characterised in that** the layer or sheet (38) extends over the entire surface of the supporting body.

6. The method according to any one of the preceding claims, **characterised in that** the circuit is chosen from an antenna (32), a display, a sensor, a keyboard, a switch, and an electrical or electronic component.

7. The method according to any one of the preceding claims, **characterised in that** the circuit (32) is in the form of an antenna and comprises an embedded conductor wire (33).

8. The method according to any one of the preceding claims, **characterised in that** the connection zone (Z1, Z2) comprises alternations of wire.

9. The method according to any one of the preceding claims, **characterised in that** the module (17) is placed in the supporting body so as to have one side opening onto at least one of the opposite main faces of the supporting body and **in that** there is a maintaining means comprising a layer or a sheet (35a, 38) covering the module and being attached to the supporting body.

10. The method according to the preceding claim, **characterised in that** it comprises a step of laminating sheets or a portion of the covering sheet on the module.

11. An intermediate device with a purely radiofrequency electronic module (SM) for a smart card or electronic passport, said intermediate device comprising:
- a supporting body (31, 32),
- a cavity opening onto at least one of the main faces of the supporting body,
- at least one interconnection zone (Z1, Z2) in said cavity for the interconnection of an electrical circuit (32), borne by the supporting body,
- an electronic module (17) placed in said cavity and connected to said interconnection zone (Z1, Z2) by an anisotropic connection material (34), said material (34) being compressed between said zone (Z1, Z2) and the module (17),
**characterised in that** it comprises:
- a means for isolating and/or maintaining (35, 35a, 35b, 38) the compressed state of said anisotropic material (34), said isolating and/or maintaining means overlapping the cavity, the module and the supporting body.
